# EUROPÄISCHE PATENTSCHRIFT

(11) **EP 2 873 875 B1**
(45) Veröffentlichungstag und Bekanntmachung des Hinweises auf die Patenterteilung: **26.06.2019**
(21) Anmeldenummer: 14192260.9
(22) Anmeldetag: 07.11.2014
(51) Int. Cl.: F16B 7/18

(54) **Stange und Bausatz, insbesondere für Fahrzeuge zur Beförderung von Personen im öffentlichen Nah- und Fernverkehr**
Rod and kit, in particular for vehicles for the transport of persons in regional and long-distance public transport
Barre et jeu de pièces détachées, en particulier pour des véhicules destinés au transport en commun régionaux et longue distance de personnes

(30) Priorität: 14.11.2013 DE 102013223277
(43) Veröffentlichungstag der Anmeldung: 20.05.2015
(73) Patentinhaber: Bombardier Transportation GmbH, 10785 Berlin (DE)
(72) Erfinder: Gäde, Matthias, 10247 Berlin (DE)
(74) Vertreter: Brunotte, Joachim Wilhelm Eberhard

(56) Entgegenhaltungen:
- DE-A1- 2 658 876
- DE-A1- 3 408 650
- DE-A1- 3 707 755
- DE-A1- 19 503 346
- DE-C1- 4 029 008
- GB-A- 2 185 798
- JP-A- S6 455 499
- JP-A- 2002 174 378

## Beschreibung

Die Erfindung betrifft einen Bausatz, insbesondere für Fahrzeuge zur Beförderung von Personen im öffentlichen Nah- und Fernverkehr, mit zumindest einer aus einem abgelängten Rohrabschnitt bestehenden Stange, wobei an mindestens einem Endabschnitt des Rohrabschnitts oder eines der Rohrabschnitte ein Verbindungselement angeordnet ist für eine Rohr-Rohr-Verbindung oder für eine Verbindung mit einem wand-, decken- und/oder bodenseitig an einer Struktur, insbesondere einer Fahrzeugstruktur, angeordneten Anschlussstück. Ferner gehört ein Fahrzeug, insbesondere ein Schienenfahrzeug oder Bus, z. B. zur Beförderung von Personen im öffentlichen Nah- und Fernverkehr, zum Umfang der Erfindung, wobei das Fahrzeug den Bausatz aufweist.

Metallrohre, welche in Fahrzeugen des öffentlichen Nah- oder Fernverkehrs wie Schienenfahrzeugen und Bussen als Haltestangen, Handläufe oder für Konstruktionen von Gepäckablagen eingesetzt werden sind grundsätzlich bekannt. Derartige aus Metallrohren bestehende Stangen sind Bestandteile von Haltestangensystemen, die in einem Innenraum des Fahrzeugs, beispielsweise im Innenraum eines Wagenkastens des Schienenfahrzeugs oder Busses, montiert sind. Die in dem Fahrzeug beförderten Personen können sich während der Fahrt an den vertikal oder horizontal angeordneten und meist mit der Fahrzeugstruktur verbundenen Haltestangen oder Handläufen festhalten, so dass bei auftretenden Schwankungen, Erschütterungen oder Schwingungen des Fahrzeugs ein sicherer Halt für die stehenden oder gehenden Fahrgäste gegeben ist. Solche Stangen werden aber auch für Teile von Konstruktionen für Gepäckablagen und Regale verwendet.

Zum Befestigen von derartigen Stangen in Fahrzeugen des Personentransportes sind unterschiedliche Möglichkeiten bekannt. So ist es allgemein bekannt, die meist rohrförmigen Stangen mit der Fahrzeugstruktur, z.B. Fußboden, Wänden und Innendecke, zu verschrauben. Dabei ist insbesondere ein Ausgleich von Toleranzen des Abstandes zu anderen Teilen des Fahrzeuges zu schaffen. Weiter sind derartige Rohre bzw. Stangen herkömmlicher Weise aus Stahlrohren gefertigt, die entsprechend den gewünschten Endabmessungen des Stangensystems zugeschnitten und geformt sind. Dabei sind die Wände der Metallrohre verhältnismäßig dick gestaltet, um zum einen die notwendige mechanische Festigkeit und Stabilität auch bei großen Stützweiten der im Dachbereich befestigten Stangen zu gewährleisten. Zum anderen ist dadurch sichergestellt, dass die Metallrohre auch hohen äußeren Krafteinwirkungen, beispielsweise durch Vandalismus, standhalten können. Aufgrund der großen Wanddicke weisen derartige Stangen aus Stahl jedoch ein hohes Eigengewicht auf. Das verhältnismäßig hohe Eigengewicht der Stangen erhöht dabei den Energieverbrauch des Fahrzeugs erheblich. Bei Schienenfahrzeugen ist nicht nur für den Nahverkehr (z.B. S-und U-Bahnen oder Straßenbahnen), sondern auch für den Regionalverkehr (zum Beispiel Doppelstockzüge) und Fernverkehr (zum Beispiel Hochgeschwindigkeitszüge) eine energiesparende Betriebsweise wünschenswert, sodass das Gesamtgewicht des Fahrzeugs möglichst gering sein soll. Dieser Forderung kann bei Einsatz der schweren Metallrohre für Stangen im Innenausbau von Fahrzeugen für den Personentransport nicht ausreichend Rechnung getragen werden. Der Stand der Technik DE 34 08 650 A1 zeigt ein CFK-Rohr, welches mit einem Gewindebolzen und einer Gewindehülse in einer Metallhülse befestigt ist.

Der Erfindung liegt daher die Aufgabe zugrunde, Rohrabschnitte für Stangensysteme und Stangen (insbesondere als Teil eines Fahrzeugs z. B. zur Beförderung von Personen im öffentlichen Nah- und Fernverkehr) der eingangs genannten Art dahingehend zu verbessern, dass zum einen das Gewicht der Rohrabschnitte deutlich verringert ist und zum anderen ein Ausgleich von Toleranzen bei der Verbindung von Rohrabschnitten untereinander sowie mit ortsfesten Teilen der Fahrzeugstruktur ermöglicht wird.

Ein Bausatz, der diese Aufgabe löst, ist durch Patentanspruch 1 definiert.

Insbesondere erstreckt sich die Hülse im Endabschnitt des Rohrs entlang der Innenseite des Rohres. Am freien Ende der Hülse kann der Außendurchmesser zunehmen, sodass die Hülse dort einen gleich großen oder sogar größeren Außendurchmesser als der Endabschnitt des Rohres aufweist. Das Verstärkungselement erstreckt sich zumindest von der Innenseite der Hülse zu der Innenseite des Rohres und ist auf den Innenseiten der Hülse und des Rohres aufgebracht. Die Hülse befindet sich im Endabschnitt des Rohrs daher (in radialer Richtung betrachtet) zwischen dem Verstärkungselement und dem Rohr.

Der Endabschnitt des Rohres, die Hülse, insbesondere die Gewindehülse, und/oder die Gewindebuchse können (mit Ausnahme des Gewindes selbst) zumindest in einem ihrer Längsabschnitte und vorzugsweise über ihre gesamte Länge rotationssymmetrisch und insbesondere zylindrisch geformt sein. Z. B. die Innenseite der Hülse und/oder zumindest die Außenseite des Verstärkungselements können alternativ oder zusätzlich in zumindest einem Längsabschnitt konisch geformt sein, das heißt Durchmesser vergrößert sich bzw. verkleinert sich in Längsrichtung.

Nicht nur bei dem zuvor beschriebenen Bausatz, sondern allgemein bei Stangen ergibt sich durch das Verstärkungselement der Vorteil, dass die Wandung des Metallrohres sehr dünn gestaltet werden kann, da das Verstärkungselement eine verstärkende, insbesondere tragende, Funktion in der Stange, insbesondere der Haltestange, dem Handlauf oder den Stangen für Gepäckablagen oder Regale übernimmt. Das Verstärkungselement versteift dabei das Metallrohr von innen, so dass die Wandung des Metallrohres verhältnismäßig dünn und dadurch mit geringem Gewicht gefertigt werden kann. Somit kann im Gegensatz zu dem in herkömmlicher Weise eingesetzten relativ dickwandigen Rohrmaterial ein relativ dünnwandiges Metallrohr mit einer geringen Wandstärke verwendet werden. Um bei der Verwendung des dünnwandigen Metallrohrs darüber hinaus die mechanische Stabilität und Festigkeit der Stange, insbesondere Haltestange, sicherzustellen, ist im Inneren des Metallrohres das Verstärkungselement aus Faserverbundwerkstoff vorzugsweise ein kohlenstofffaserverstärkter Kunststoff (CFK) vorgesehen. Bevorzugt sind die Fasern oder ein Teil der Fasern des Faserverbundwerkstoffes in Richtung der Längserstreckung (insbesondere einer Längsachse, z. B. einer Symmetrieachse eines geraden Rohrabschnittes) der Haltestange orientiert. Dadurch ist es möglich, insbesondere Haltestangen oder andere im Innenausbau von Fahrzeugen verwendete Stangensysteme mit geringem Eigengewicht und zugleich einer hohen mechanischen Festigkeit herzustellen, die auch den Anforderungen im Hinblick auf eine Resistenz gegen Vandalismus und Zerstörung bei übermäßiger äußerer Krafteinwirkung genügt.

Auch weist die Haltestange aufgrund des Vorsehens des äußeren Metallrohres die gleichen optischen Eigenschaften und die gleiche Formgebung wie herkömmliche Haltestangen auf.

Durch das bei dem oben genannten Bausatz vorhandene zumindest eine Verbindungselement ist ein einfaches und schnelles Befestigen und/oder Auswechseln der Stangen möglich, insbesondere an einer Stange als Teil eines bestehenden Stangensystems. Daher können auch vorhandene,
schwere Metallrohre ausgewechselt werden. Dabei ist ein Ausgleich von Toleranzen bei der Verbindung von Rohrabschnitten untereinander in einem bestehenden Stangensystem sowie bei der Verbindung eines Rohrabschnittes mit ortsfesten Teilen der Fahrzeugstruktur in besonders einfacher Weise möglich.

Vorteilhaft ist vorgesehen, dass die Gewindebuchse eine schlitzförmige Öffnung sowie ein Außengewinde oder ein Innengewinde und ein Außengewinde aufweist, wobei der Distanzring über eine radiale Bohrung zum Ansetzen eines Montagewerkzeuges verfügt, über welche die Gewindebuchse durch Eingriff des Werkzeuges in die schlitzförmigen Öffnung verstellbar ist und beispielsweise zwei Rohrabschnitte miteinander verschraubbar sind.

Nicht nur bezogen auf eine Gewindehülse in einem Endabschnitt eines Metallrohres, sondern allgemein in Bezug auf das Einbringen einer Hülse (zum Beispiel der unten erwähnten Verbindungshülse) in einen Rohr-Endabschnitt ist es von Vorteil, die Hülse in das Metallrohr einzuschweißen und/oder einzupressen (z. B. durch Erwärmen des Rohr-Endabschnittes, Einbringen der Hülse in den Endabschnitt und aktives oder passives Abkühlen des Endabschnittes). Danach wird das Verstärkungselement mit der Stange verbunden, so dass sich das Verstärkungselement zumindest von der Innenseite der Gewindehülse zu der Innenseite des Metallrohres erstreckt und auf den Innenseiten der Gewindehülse und des Metallrohres aufgebracht ist. Das Aufbringen erfolgt zum Beispiel dadurch, dass das Verstärkungselement in das Rohr eingepresst und bei aufrechterhaltener Pressung durch Erwärmen mit dem Metallrohr verbacken wird. Die Wandung des Verstärkungselements wird dazu, beispielsweise durch einen dehnbaren Hohlkörper, der mit einem Fluid befüllt und gedehnt werden kann, an die Innenwand des Metallrohres und der Hülse gedrückt. Das verbindende Element und/oder Material kann zum Beispiel ein Kunstharz aufweisen oder sein.

Wenn in dieser Beschreibung von einem Einschweißen der Hülse die Rede ist, schließt dies auch den Fall mit ein, dass die Hülse in den Endabschnitt des Rohres eingelötet wird.

Nach einer weiteren vorteilhaften Ausgestaltung der Erfindung ist vorgesehen, dass zur Verbindung von Rohrabschnitten mit der Fahrzeugstruktur Anschlussstücke zum Einsatz kommen, die ein Trägerelement, einen Gewindebolzen, optional eine Anschlussmanschette sowie optional eine Unterlegscheibe umfassen. Das mit der Fahrzeugstruktur verbindbare Trägerelement ist dabei insbesondere umgekehrt u-förmig ausgebildet und mit der Fahrzeugstruktur z. B. mittels Schraubverbindungen verbindbar. Das Trägerelement weist eine Öffnung auf in welcher ein in die Anschlussmanschette ragender Gewindebolzen gelagert ist, wobei der Kopf des Gewindebolzens aus Sicht des freien Endes des Gewindebolzens jenseits (zum Beispiel unterhalb) der Öffnung gegen das Trägerelement drückt. Vorteilhaft ist dabei der Rohrabschnitt über die Gewindehülse, die Gewindebuchse und den Gewindebolzen mit dem Anschlussstück verschraubbar, wobei die Gewindebuchse in diesem Fall ein Innen- und ein Außengewinde aufweist, wobei vorteilhaft vorgesehen ist, dass die Gewindesteigung des Außengewindes größer ist als die des Innengewindes. Dadurch wird es ermöglicht, dass zunächst die Gewindebuchse auf den Gewindebolzen aufgeschraubt wird und das Rohrende mit der Gewindehülse über den Gewindebolzen übergestülpt wird, bis das Außengewinde der Gewindebuchse mit dem Innengewinde der am Rohrende eingepressten und/oder eingeschweißten Gewindehülse in Eingriff gelangt. Durch Verdrehen der Gewindebuchse werden gleichzeitig das Rohrende in Richtung Trägerelement bewegt und die Gewindebuchse in Richtung des freien Endes des Gewindebolzens bewegt. Dabei wird die Gewindehülse wegen der größeren Gewindesteigung des Außengewindes der Gewindebuchse schneller bewegt und kann daher das Rohrende an das Trägerelement anpressen.

Zur Herstellung der Stange ist vorteilhaft vorgesehen, dass eine Verbindungshülse, insbesondere eine Gewindehülse, in den Endabschnitt eingepresst und/oder eingeschweißt wird und danach ein Verstärkungselement aus einem Faserverbundwerkstoff auf den Innenseiten der Gewindehülse und des Metallrohres aufgebracht wird, so dass es sich von der Innenseite der Gewindehülse zu der Innenseite des Metallrohres erstreckt.

Nicht zum Gegenstand der beigefügten Ansprüche gehört eine Verwendung eines Verstärkungselementes, welches aus einem Faserverbundwerkstoff besteht und an einer Innenwandung eines Metallrohres zumindest abschnittsweise aufgebracht ist, für eine aus zumindest einem abgelängten Rohrabschnitt bestehende Stange, insbesondere für in Fahrzeugen des öffentlichen Nah- und Fernverkehr angeordneten Haltestangen, Handläufe oder Teile von Konstruktionen für Gepäckablagen oder Regale.

Nachfolgend werden Ausführungsbeispiele der Erfindung anhand der in den Figuren dargestellten Zeichnungen näher erläutert. Es zeigen:
- Fig. 1: in einer Explosionsdarstellung einen Abschnitt einer Haltestange mit einem Verbindungselement für eine Rohr-Rohr-Verbindung,
- Fig. 2: eine Haltestange mit einer Rohr-Rohr- Verbindung,
- Fig. 3: in einer Explosionsdarstellung einen Abschnitt einer Haltestange mit Verbindungselement zur Verbindung mit einem Anschlussstück zur Verbindung mit einer Haltestange mit der Fahrzeugstruktur,
- Fig. 4: in einer Schnittdarstellung die Verbindung eines Anschlussstücks mit einer Haltestange,
- Fig. 5: Haltestangen,
- Fig. 6: Handläufe,
- Fig. 7: ein Stangensystem für Gepäckablagen oder Gepäckregale.

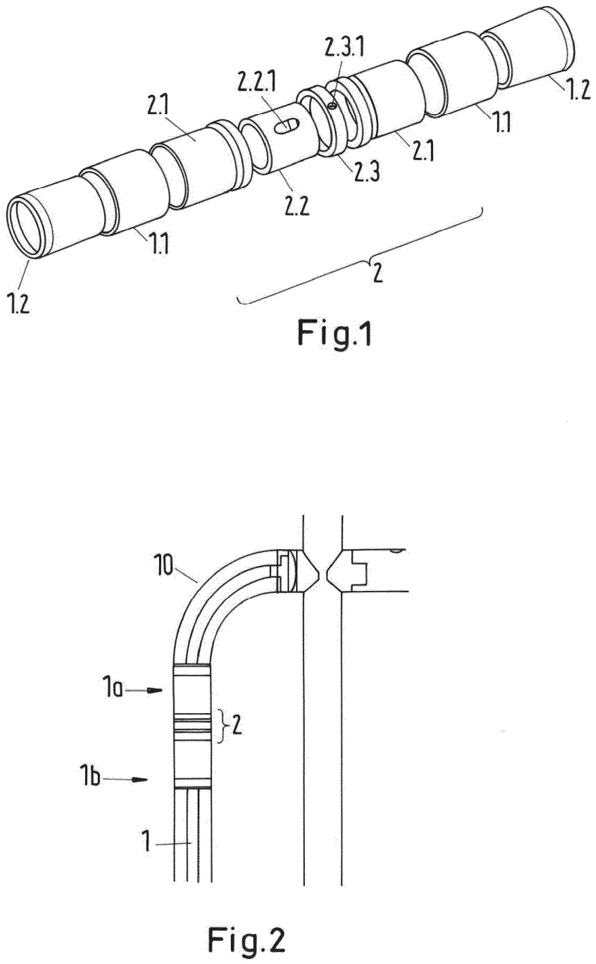

In den Fig. 1 und 2 ist jeweils ein Bausatz sowie eine Stange 1 gemäß der Erfindung für eine Rohr-Rohr-Verbindung von in Fahrzeugen zur Beförderung von Personen im öffentlichen Nah- und Fernverkehr verwendeten Stangensystemen, insbesondere von Haltestangen 10 dargestellt. Die aus zumindest einer aus einem abgelängten Rohrabschnitt bestehenden Stange 1 weist ein Verbindungselement 2 auf. Die dargestellten Rohrabschnitte 1a, 1b bestehen jeweils aus einem Metallrohr 1.1 und einem Verstärkungselement 1.2 aus einem Faserverbundwerkstoff.

Das Verbindungselement 2 weist eine Gewindehülse 2.1 auf, die sich im Endabschnitt des Rohrs entlang der Innenseite des Rohres erstreckt. Am freien Ende der Gewindehülse 2.1 nimmt der Außendurchmesser zu, sodass die Gewindehülse 2.1 dort einen gleich großen oder sogar größeren Außendurchmesser als der Endabschnitt des Rohres aufweist. Das Verstärkungselement 1.2 erstreckt sich zumindest von der Innenseite der Gewindehülse 2.1 zu der Innenseite des Metallrohres 1.1 und ist auf den Innenseiten der Gewindehülse 2.1 und des Metallrohres 1.1 aufgebracht. Die Gewindehülse 2.1 befindet sich im Endabschnitt des Rohrs und daher (in radialer Richtung betrachtet) zwischen dem Verstärkungselement 1.2 und dem Metallrohr 1.1.

Die Herstellung der Stange 1 erfolgt dabei derart, dass eine Verbindungshülse, insbesondere die Gewindehülse 2.1, in den Endabschnitt eines Rohrabschnitts 1a, 1b eingepresst und/oder eingeschweißt wird und danach das Verstärkungselement 1.2 aus Faserverbundwerkstoff auf den Innenseiten der Gewindehülse 2.1 und des Metallrohres 1.1 aufgebracht wird, so dass es sich von der Innenseite der Gewindehülse 2.1 zu der Innenseite des Metallrohres 1.1 erstreckt.

Das Verbindungselement 2 weist eine Gewindehülse 2.1, eine Gewindebuchse 2.2 und einen Distanzring 2.3 auf, wobei die Gewindehülse 2.1 und die Gewindebuchse 2.2 mit korrespondierenden Gewinden zur gegenseitigen Verbindung zweier Rohrabschnitte 1a, 1b ausgebildet sind. Die Gewindebuchse 2.2 umfasst dafür nur ein Außengewinde und eine schlitzförmige Öffnung 2.2.1. Der Distanzring 2.3 weist eine radiale Bohrung 2.3.1 zum Ansetzen eines Montagewerkzeuges auf, durch welche die Gewindebuchse 2.2 durch Eingriff des Werkzeuges in die schlitzförmigen Öffnung 2.2.1 verstellbar ist, wodurch die beiden Rohrabschnitte 1a, 1b miteinander verschraubbar sind. Das Montagewerkzeug ist nicht dargestellt. Die Gewindehülsen 2.1 sind dabei wie oben beschrieben jeweils im Metallrohr 1.1 eingepresst und eingeschweißt und das Verstärkungselement 1.2 ist auf der Innenseite der Gewindehülse 2.1 und dem Metallrohr 1.1 aufgebracht. Der Einsatz eines Faserverbundwerkstoffs, wie z.B. einem kohlenstofffaserverstärktem Kunststoff (CFK), hat sich bewährt, da dieses Werkstoffmaterial ein geringes Gewicht, hohe mechanische Festigkeit und Stabilität sowie ein neutrales Längenausdehnungsverhalten aufweist. Zur Auflaminierung des Verstärkungselementes aus kohlenstofffaserverstärktem Kunststoff (CFK) können alle dafür bekannten Verfahren verwendet werden. Das Verstärkungselement kann dabei abschnittsweise oder über die gesamte Innenwandung des Metallrohres bzw. der Stangen aufgebracht sein.

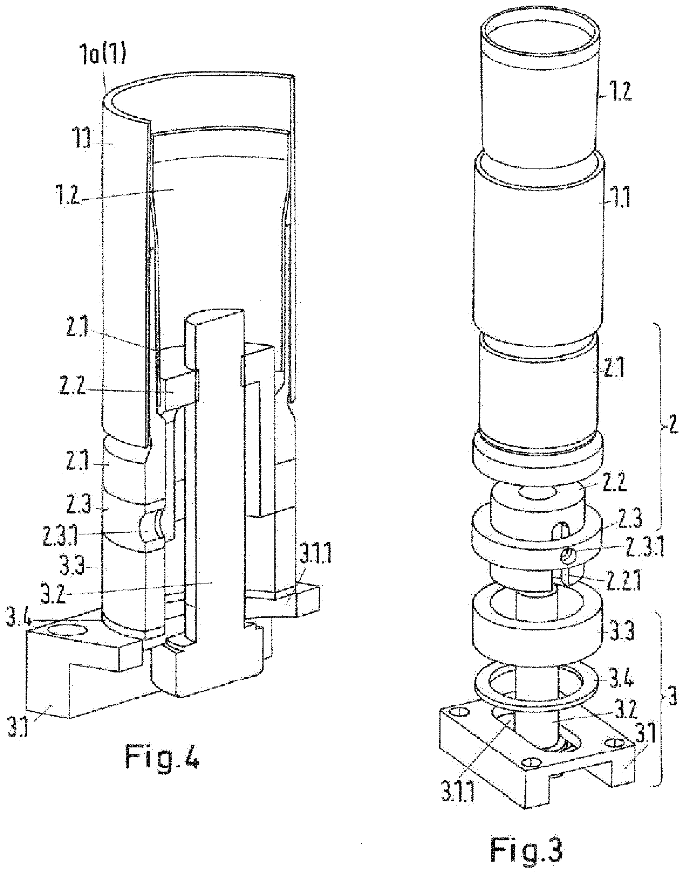

Die Fig. 3 und 4 zeigen jeweils einen Abschnitt einer Stange 1 mit Verbindungselement 2 zur Verbindung mit einem Anschlussstück 3 zur Verbindung mit einer Stange1 mit der Fahrzeugstruktur, wobei auf die Darstellung der Fahrzeugstruktur verzichtet wurde. Das Anschlussstück 3 umfasst ein Trägerelement 3.1, einen Gewindebolzen 3.2, eine Anschlussmanschette 3.2 sowie eine Unterlegscheibe 3.4, wobei das Trägerelement 3.1 umgekehrt U-förmig ausgebildet und mit der Fahrzeugstruktur vorzugsweise mittels Schraubverbindungen verbindbar ist. Auf eine Darstellung hierzu wurde verzichtet. Das Trägerelement 3.1 ist mit einer Öffnung 3.1.1 versehen ist, wobei in der Öffnung 3.1.1 der in die Anschlussmanschette 3.3 ragende Gewindebolzen 3.2 gelagert ist und der Kopf des Gewindebolzens gegen das Trägerelement 3.1 spannt. Die Öffnung 3.1.1 ist vorzugsweise schlitzförmig ausgebildet, wodurch ein Toleranzausgleich hinsichtlich der Ausrichtung der zu befestigenden Stange 1 ermöglicht wird. Der Rohrabschnitt 1a der Stange 1 ist mit dem Anschlussstück 3 über den Gewindebolzen 3.2, die Anschlussmanschette 3.3, die Gewindebuchse 2.2, die Gewindehülse 2.1 und den Distanzring 2.3 verschraubbar. Die Anschlussmanschette 3.3 weist ein Innengewinde und die Gewindebuchse 2.2 ein Innen- und ein Außengewinde auf, wobei die Gewindesteigung des Außengewindes größer ist als die des Innengewindes. Dadurch wird zunächst die Gewindebuchse 2.2 auf den Gewindebolzen 3.2 aufgeschraubt und das Rohrende mit der Gewindehülse 2.1 über das freie Ende des Gewindebolzens 3.2 übergestülpt, bis das Außengewinde der Gewindebuchse 2.2 mit dem Innengewinde der im Rohrende eingepressten und/oder eingeschweißten Gewindehülse 2.1 in Eingriff gelangt. Durch Verdrehen der Gewindebuchse 2.2 werden gleichzeitig das Rohrende in Richtung Trägerelement 3.1 bewegt und die Gewindebuchse 2.2 in Richtung des freien Endes des Gewindebolzens 3.2 bewegt. Dabei wird die Gewindehülse 2.1 wegen der größeren Gewindesteigung des Außengewindes der Gewindebuchse 2.2 schneller bewegt.

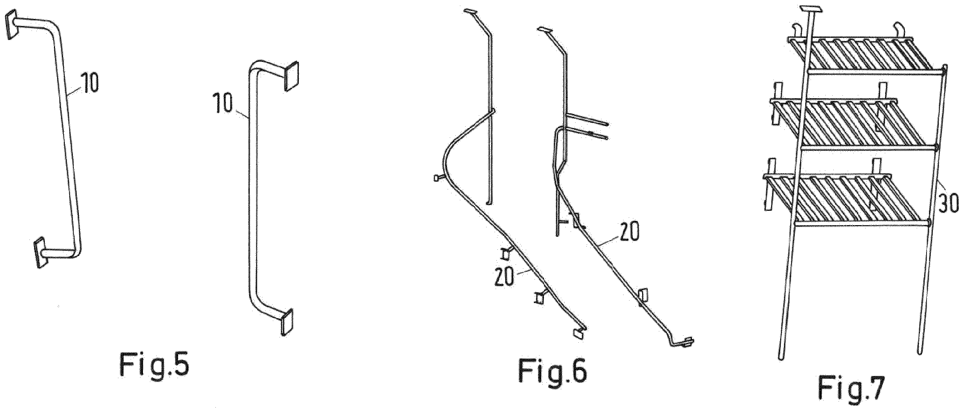

Die Fig. 5 bis 7 zeigen aus abgelängten Rohrabschnitten bestehende Stangen zur Haltemöglichkeit von Passagieren, nämlich Haltestangen, Handläufe oder Teile von Konstruktionen für Gepäckablagen oder Regale für den Einsatz in Fahrzeugen des öffentlichen Personenverkehrs bei welchen die vorliegende Erfindung zum Einsatz gelangt. Die Haltestangen 10 zeichnen sich dadurch aus, dass sie in Fahrzeugen der genannten Art meist vertikal ausgerichtet sind und dabei an einer Boden-, Decken- oder Seitenwand der Fahrzeugstruktur mittels eines Anschlussstückes befestigt sind. Handläufe 20 sind demgegenüber z. B. horizontal oder aufsteigend entlang von Treppen ausgerichtet. Der Handlauf 20 in Fig. 6 ist insbesondere aus mehreren separat hergestellten Rohrabschnitten zusammengesetzt, wobei die Rohrabschnitte zum Beispiel in der Art von Fig. 1 miteinander verbunden sind. Der Figur entnehmbar ist, dass Rohrabschnitte auch gebogen sein können. In der Fig. 7 ist eine beispielhafte Anordnung eines Gepäckregals 30 gezeigt. Derartige Konstruktionen aus Stangen dienen der Ablage von Gepäckstücken. Sie können aber auch als Haltemöglichkeit für Passagiere dienen.

## Patentansprüche

1. Bausatz, insbesondere für Fahrzeuge zur Beförderung von Personen im öffentlichen Nah- und Fernverkehr, mit zumindest einer aus einem abgelängten Rohrabschnitt (1a, 1b) bestehenden Stange (1), wobei an mindestens einem Endabschnitt des Rohrabschnitts (1a, 1b) oder eines der Rohrabschnitte (1a, 1b) ein Verbindungselement (2) angeordnet ist für eine Rohr-Rohr-Verbindung oder für eine Verbindung mit einem wand-, decken- und/oder bodenseitig an einer Struktur, insbesondere einer Fahrzeugstruktur, angeordneten Anschlussstück (3), wobei
- der zumindest eine Rohrabschnitte (1a, 1b) ein Metallrohr (1.1) und ein Verstärkungselement (1.2) aus einem Faserverbundwerkstoff aufweist, welches an einer Innenwandung des Metallrohres (1.1) zumindest abschnittsweise aufgebracht ist,
- das Verbindungselement (2) eine Gewindehülse (2.1), eine Gewindebuchse (2.2) und einen Distanzring (2.3) aufweist, wobei die Gewindehülse (2.1) und die Gewindebuchse (2.2) mit korrespondierenden Gewinden zur gegenseitigen Verbindung der Rohrabschnitte (1a, 1b) oder zur wand-, decken und/oder bodenseitigen Befestigung des Rohrabschnittes (1a, 1b) mit dem Anschlussstück (3) ausgebildet sind.

2. Bausatz nach Anspruch 1, **dadurch gekennzeichnet, dass** die Gewindebuchse (2.2) ein Außengewinde und eine schlitzförmige Öffnung (2.2.1) aufweist.

3. Bausatz nach Anspruch 2, **dadurch gekennzeichnet, dass** der Distanzring (2.3) eine radiale Bohrung (2.3.1) zum Ansetzen eines Montagewerkzeuges aufweist, über welche die Gewindebuchse (2.2) durch Eingriff des Werkzeuges in die schlitzförmige Öffnung (2.2.1) verstellbar ist, wobei zwei Rohrabschnitte (1a, 1b) miteinander verschraubbar sind.

4. Bausatz nach einem der Ansprüche 1 bis 3, **dadurch gekennzeichnet, dass** die Gewindehülse (2.1) im Metallrohr (1.1) eingepresst und/oder eingeschweißt ist und das Verstärkungselement (1.2) sich zumindest von der Innenseite der Gewindehülse (2.1) zu der Innenseite des Metallrohres (1.1) erstreckt und auf den Innenseiten der Gewindehülse (2.1) und des Metallrohres (1.1) aufgebracht ist.

5. Bausatz nach einem der Ansprüche 1 bis 4, **dadurch gekennzeichnet, dass** das Anschlussstück (3) ein Trägerelement (3.1), einen Gewindebolzen (3.2), optional eine Anschlussmanschette (3.3) sowie optional eine Unterlegscheibe (3.4) aufweist, wobei das Trägerelement (3.1) mit der Fahrzeugstruktur verbindbar ist und insbesondere umgekehrt u-förmig ausgebildet und mit einer Öffnung (3.1.1) versehen ist, wobei in der Öffnung (3.1.1) der in die Anschlussmanschette (3.3) ragende Gewindebolzen (3.2) gelagert ist und der Kopf des Gewindebolzen gegen das Trägerelement (3.1) spannt.

6. Bausatz nach einem der Ansprüche 1 bis 5, **dadurch gekennzeichnet, dass** der Rohrabschnitt (1a, 1b) über die Gewindehülse (2.1), die Gewindebuchse (2.2) und den Gewindebolzen (3.2) mit dem Anschlussstück (3) verschraubbar ist.

7. Bausatz nach den Anspruch 6, **dadurch gekennzeichnet, dass** die Anschlussmanschette (3.3) ein Innengewinde aufweist und die Gewindebuchse (2.2) ein Innen- und ein Außengewinde aufweist, wobei die Gewindesteigung des Außengewindes größer ist als die des Innengewindes.

8. Bausatz nach einem der o.g. Ansprüche, **dadurch gekennzeichnet, dass** das Verstärkungselement (1.2) aus einem kohlenstofffaserverstärktem Kunststoff (CFK) besteht.

9. Fahrzeug, mit einem Bausatz nach einem der vorhergehenden Ansprüche, **dadurch gekennzeichnet, dass** die aus abgelängten Rohrabschnitten bestehenden Stangen (1) im Fahrzeug angeordnete Haltestangen (10), Handläufe (20) oder Teile von Konstruktionen für Gepäckablagen oder Regale (30) sind.

## Claims

1. A kit, in particular for vehicles for transporting persons in regional and long-distance public transport, having at least one rod (1) comprising a cross-cut tube segment (1a, 1b), wherein arranged on at least one end segment of the tube segment (1a, b) or of one of the tube segments (1a, 1b) is a connecting element (2) for a tube-tube connection or for a connection to a connecting piece (3) arranged on a wall, top, and/or bottom side of a structure, in particular a vehicle structure, wherein
- the at least one tube segment (1a, 1b) has a metal tube (1.1) and a reinforcing element (1.2) made of a fiber composite that is applied, at least in sections, to an inner wall of the metal tube (1.1),
- the connecting element (2) has a threaded sleeve (2.1), a threaded bushing (2.2), and a spacer ring (2.3), wherein the threaded sleeve (2.1) and the threaded bushing (2.2) are embodied with corresponding threads for mutually connecting the tube segments (1a, 1b) or for attaching the tube segment (1a, 1b) on the wall, top, and/or bottom side to the connecting piece (3).

2. The kit according to claim according to claim 1, **characterized in that** the threaded bushing (2.2) has a male thread and a slit-like opening (2.2.1).

3. The kit according to claim 2, **characterized in that** spacer ring (2.3) has a radial bore (2.3.1) for placing an assembly tool, via which bore the threaded bushing (2.2) may be adjusted using the intervention of the tool in the slit-like opening (2.2.1), wherein two tube segments (1a, 1b) may be screwed to one another.

4. The kit according to any of claims 1 through 3, **characterized in that** the threaded sleeve (2.1) is pressed into and/or welded into the metal tube (1.1) and the reinforcing element (1.2) extends at least from the inside of the threaded sleeve (2.1) to the inside of the metal tube (1.1) and is applied to the insides of the threaded sleeve (2.1) and metal tube (1.1).

5. The kit according to any of claims 1 through 4, **characterized in that** the connecting piece (3) has a support element (3.1), a threaded bolt (3.2), optionally a connecting collar (3.3), and optionally a washer (3.4), wherein the support element (3.1) may be connected to the vehicle structure and in particular is embodied in a reverse u-shape and is provided with an opening (3.1.1), wherein the threaded bolt (3.2) projecting into the connecting collar (3.3) is borne in the opening (3.1.1) and the head of the threaded bolt is stressed against the support element (3.1).

6. The kit according to any of claims 1 through 5, **characterized in that** the tube segment (1a, 1b) may be screwed to the connecting piece (3) via the threaded sleeve (2.1), the threaded bushing (2.2), and the threaded bolt (3.2).

7. The kit according to claim 6, **characterized in that** the connecting collar (3.3) has a female thread and the threaded bushing (2.2) has a male and a female thread, wherein the thread pitch of the male thread is greater than that of the female thread.

8. The kit according to any of the preceding claims, **characterized in that** the reinforcing element (1.2) consists of a carbon fiber reinforced plastic.

9. A vehicle having a kit according to any of the preceding claims, **characterized in that** the rods (1) comprising cross-cut tube segments are gripping rods, (10), handrails (20), or parts of structures for holding baggage or shelves (30) that are arranged in the vehicle.

## Revendications

1. Kit, en particulier pour des véhicules servant au transport de personnes dans les transports en commun publics régionaux et longue distance, avec au moins une barre (1) constituée d'une section tubulaire (1a, 1b) découpée à la bonne longueur, dans lequel un élément de liaison (2) est disposé au niveau d'au moins une section d'extrémité de la section tubulaire (1a, 1b) ou d'une des sections tubulaires (1a, 1b) pour une liaison tube-tube ou pour une liaison avec une pièce de raccordement (3) disposée côté mur, plafond et/ou sol au niveau d'une structure, en particulier d'une structure de véhicule, dans lequel
- l'au moins une section tubulaire (1a, 1b) présente un tube métallique (1.1) et un élément de renforcement (1.2) composé d'un matériau composite à base de fibres, lequel est installé au moins par endroits au niveau d'une paroi intérieure du tube métallique (1.1),
- l'élément de liaison (2) présente un manchon fileté (2.1), une douille filetée (2.2) et une bague d'espacement (2.3), dans lequel le manchon fileté (2.1) et la douille filetée (2.2) sont réalisés avec des filetages correspondants servant à relier mutuellement les sections tubulaires (1a, 1b) ou servant à fixer côté mur, plafond et/ou sol la section tubulaire (1a, 1b) à la pièce de raccordement (3).

2. Kit selon la revendication 1, **caractérisé en ce que** la douille filetée (2.2) présente un filetage extérieur et une ouverture (2.2.1) en forme d'entaille.

3. Kit selon la revendication 2, **caractérisé en ce que** la bague d'espacement (2.3) présente un alésage radial (2.3.1) servant à placer un outil de montage, par l'intermédiaire duquel la douille filetée (2.2) peut être ajustée par la prise de l'outil dans l'ouverture (2.2.1) en forme d'entaille, dans lequel deux sections tubulaires (1a, 1b) peuvent être vissées entre elles.

4. Kit selon l'une quelconque des revendications 1 à 3, **caractérisé en ce que** le manchon fileté (2.1) est enfoncé et/ou soudé dans le tube métallique (1.1) et l'élément de renforcement (1.2) s'étend au moins depuis le côté intérieur du manchon fileté (2.1) vers le côté intérieur du tube métallique (1.1) et est appliqué sur les côtés intérieurs du manchon fileté (2.1) et du tube métallique (1.1) .

5. Kit selon l'une quelconque des revendications 1 à 4, **caractérisé en ce que** la pièce de raccordement (3) présente un élément de support (3.1), un boulon fileté (3.2), en option une manchette de raccordement (3.3) et en option une rondelle (3.4), dans lequel l'élément de support (3.1) peut être relié à la structure de véhicule et est réalisé en particulier à l'inverse en forme de u et est pourvu d'une ouverture (3.1.1), dans lequel le boulon fileté (3.2) dépassant dans la manchette de raccordement (3.3) est monté dans l'ouverture (3.1.1) et la tête du boulon fileté est serrée contre l'élément de support (3.1).

6. Kit selon l'une quelconque des revendications 1 à 5, **caractérisé en ce que** la section tubulaire (1a, 1b) peut être vissée à la pièce de raccordement (3) par l'intermédiaire du manchon fileté (2.1), de la douille filetée (2.2) et du boulon fileté (3.2).

7. Kit selon la revendication 6, **caractérisé en ce que** la manchette de raccordement (3.3) présente un filetage intérieur et la douille filetée (2.2) présente des filetages intérieur et extérieur, dans lequel le pas de filetage du filetage extérieur est plus grand que celui du filetage intérieur.

8. Kit selon l'une quelconque des revendications précédentes, **caractérisé en ce que** l'élément de renforcement (1.2) est constitué d'une matière plastique renforcée par des fibres de carbone (CFK).

9. Véhicule avec un kit selon l'une quelconque des revendications précédentes, **caractérisé en ce que** les barres (1) constituées de sections tubulaires découpées à la bonne longueur sont des barres de maintien (10) disposées dans le véhicule, des mains courantes (20) ou des parties de constructions pour des porte-bagages ou des étagères (30).
